Europäisches Patentamt

European Patent Office

Office européen des brevets

(19)

(11) Numéro de publication : **0 018 248**
**B1**

(12) # FASCICULE DE BREVET EUROPÉEN

(45) Date de publication du fascicule du brevet :
20.04.83

(21) Numéro de dépôt : **80400390.3**

(22) Date de dépôt : **21.03.80**

(51) Int. Cl.³ : **G 01 L   9/08**, F 02 P   5/10

(54) Capteur de pression à ondes élastiques de surface, débimètre et système d'allumage pour moteur à combustion interne mettant en oeuvre ce capteur.

(30) Priorité : **18.04.79 FR 7909726**

(43) Date de publication de la demande :
**29.10.80 Bulletin 80/22**

(45) Mention de la délivrance du brevet :
**20.04.83 Bulletin 83/16**

(84) Etats contractants désignés :
**DE GB IT NL SE**

(56) Documents cités :
**GB A 1 483 344**
**US A 4 100 811**

Le dossier contient des informations techniques présentées postérieurement au dépôt de la demande et ne figurant pas dans le présent fascicule.

(73) Titulaire : **THOMSON-CSF**
**173, Boulevard Haussmann**
**F-75379 Paris Cedex 08 (FR)**

(72) Inventeur : **Hartemann, Pierre**
**"THOMSON-CSF" - SCPI 173, Bld  Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

Jouve, 18, rue St-Denis, 75001 Paris, France

Capteur de pression à ondes élastiques de surface, débimètre et système d'allumage pour moteur à combustion interne mettant en œuvre ce capteur

La présente invention se rapporte aux capteurs à ondes élastiques de surface permettant de traduire par la fréquence d'un signal électrique la différence entre deux pressions. Un tel capteur comporte deux conduits à l'entrée desquels se manifestent les pressions de fluide à mesurer. Une lamelle de matériau piézoélectrique contenue dans le capteur se déforme élastiquement sous la poussée des fluides. L'une des faces de cette lamelle est munie de quatre jeux d'électrodes en forme de peignes interdigités de manière à former deux lignes à retard électromécaniques. Les lignes à retard coopèrent avec deux amplificateurs de manière à former deux oscillateurs électriques dont les fréquences varient en fonction des déformations subies par la lamelle. Les peignes transducteurs formant deux à deux des lignes à retard échangent des ondes élastiques de surface dans deux zones de la surface de la lamelle où, pour une même sollicitation mécanique, on observe des actions en sens contraires sur les temps de parcours. En reliant les deux oscillateurs électriques à un mélangeur soustractif, on obtient un signal de mesure dont la fréquence est représentative de l'écart entre les pressions à mesurer. Il est connu d'appliquer uniformément les deux pressions à mesurer de part et d'autre de la lamelle piézoélectrique, ce qui fournit une poussée égale à la différence des pressions agissantes. Dans ce cas, les zones d'échange des ondes élastiques de surface sont agencées de façon asymétrique, afin que les fréquences des oscillateurs varient en sens contraires et ajoutent leurs effets après mélange soustractif.

Le document US-A-4 100 811 décrit un capteur de pression à ondes élastiques de surface dans lequel l'agencement asymétrique de deux zones d'échange d'ondes élastiques de surface permet d'obtenir deux fréquences d'oscillation variant en sens contraires dont les effets s'ajoutent après mélange soustractif.

Cette solution présente plusieurs inconvénients. L'un des fluides est en contact avec la face de la lamelle piézoélectrique qui propage les ondes élastiques de surface. S'il s'agit d'un gaz porteur d'humidité et de poussières, la propagation des ondes élastiques de surface peut être sensiblement perturbée. Le positionnement asymétrique des lignes à retard fait qu'il n'est pas facile de compenser efficacement la dérive thermique.

En vue de pallier ces inconvénients, l'invention prévoit d'agencer symétriquement sur l'une des faces de la lamelle déformable piézoélectrique les moyens à ondes élastiques de surface déterminant l'accord des oscillateurs et d'adopter un mode d'action asymétrique des deux pressions sur l'autre face de la lamelle. Une troisième pression peut agir sur la face portant les lignes à retard, mais son influence est rendue insignifiante après mélange des fréquences grâce à un appui intermédiaire sur lequel repose la lamelle.

L'invention a pour objet un capteur de pression à ondes élastiques de surface comportant une lamelle déformable piézoélectrique dont le pourtour possède un lien mécanique avec un support, des premiers et seconds moyens oscillateurs dont les fréquences d'oscillation sont déterminées par des premiers et seconds moyens d'échange d'ondes élastiques de surface situés sur l'une des faces de cette lamelle et des moyens mélangeurs délivrant un signal dont la fréquence est égale à la différence des fréquences d'oscillation des premiers et seconds moyens oscillateurs, caractérisé en ce que la lamelle déformable piézoélectrique porte contre un appui intermédiaire autorisant son pivotement ; les premiers et seconds moyens d'échange étant agencés de manière à donner naissance à des décalages en fréquence égaux et de même signe en présence d'une sollicitation mécanique uniforme de la lamelle.

L'invention a également pour objet l'application de ce type de capteur aux systèmes d'allumage pour moteurs à combustion interne.

L'invention sera mieux comprise au moyen de la description ci-après et des figures annexées parmi lesquelles :

la figure 1 est une vue partielle isométrique d'un capteur de pression selon l'invention ;

la figure 2 est une figure explicative ;

la figure 3 schématise une variante de réalisation du capteur de pression selon l'invention ;

la figure 4 est une vue en coupe d'un capteur de pression avec ses éléments électroniques et un capot protecteur ;

la figure 5 illustre un système d'allumage faisant usage de capteurs de pression ;

la figure 6 est une vue isométrique d'une variante de réalisation d'un capteur de pression selon l'invention.

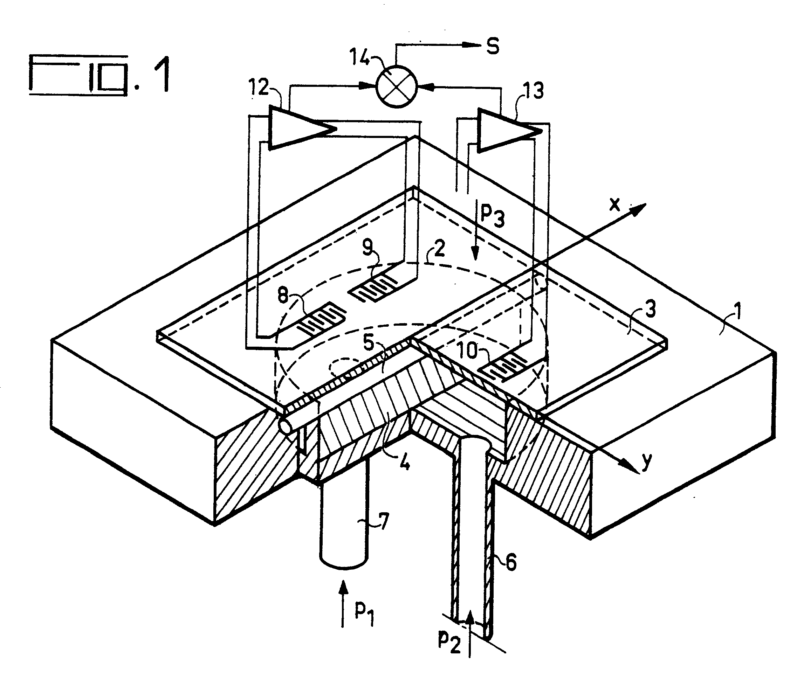

Sur la figure 1, on peut voir un support 1 comportant en son milieu une cavité cylindrique 2. Cette cavité 2 est fermée au moyen d'une lamelle 3 de matériau piézoélectrique collée sur la face plane supérieure du support 1. Une paroi séparatrice 4 solidaire du support 1 partage la cavité 2 en deux chambres hémicylindriques communiquant respectivement avec deux conduits 6 et 7. La lamelle 3 repose en outre sur un appui intermédiaire 5 qui coopère avec la paroi 4 de manière à supporter la lamelle 3 et à former une séparation étanche entre les deux chambres hémicylindriques. L'appui 5 épouse la forme d'un rouleau reposant sur une entaille en Vé de la paroi séparatrice 4. La face libre de la lamelle 3 est munie de transducteurs d'ondes élastiques de surface qui se présentent sous la forme de peignes conducteurs interdigités 8, 9 et 10. Les peignes 8 et 9 forment une ligne à retard qui boucle un amplificateur 12. Les peignes 10 coopèrent avec un jeu de peignes non visibles sur la figure 1 de façon à former une autre ligne à retard bouclant l'amplificateur 13. Chaque amplificateur forme avec le moyen d'échange d'ondes élastiques de surface qui lui correspond un oscillateur dont la fréquence d'oscillation est par exemple de l'ordre d'une centaine de Mégahertz. Cette fréquence d'oscillation varie en fonction des tensions et contraintes mécaniques que subit la lamelle 3. Les tensions alternatives produites par les deux oscillateurs sont appliquées à un mélangeur 14 qui délivre sur sa sortie S un signal alternatif ayant pour fréquence la différence des fréquences des deux tensions incidentes. Dans le cas de la figure 1, où l'axe x est un diamètre de la section circulaire de la cavité 2, les deux lignes à retard échangent des ondes élastiques de surface parallèlement à l'axe x et sont disposées symétriquement par rapport à cet axe. L'arête de contact de l'appui 5 est située à l'aplomb de l'axe x. Dans ces conditions, si la seule sollicitation exercée sur la lamelle 3 est dûe à l'action uniformément répartie de la pression $p_3$, les fréquences d'oscillation varient de la même façon en grandeur et en signe. Ceci est vrai pour une lamelle 3 à faces parallèles taillée dans un matériau homogène tel que le quartz ou le niobate de lithium.

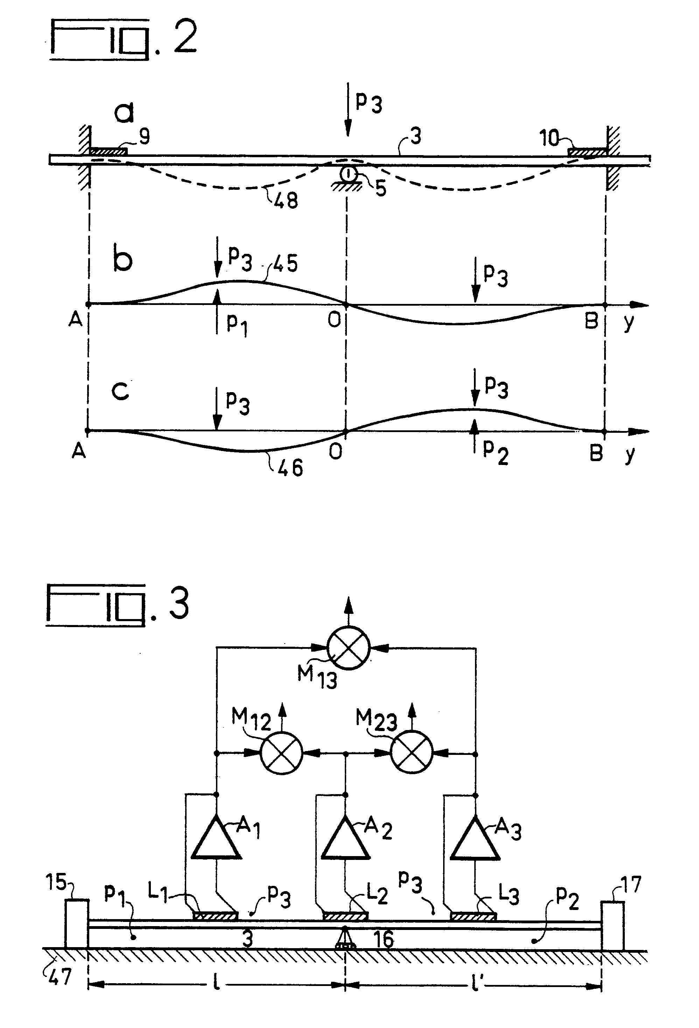

Sur la figure 2, on a schématisé en (a) la lamelle 3 encastrée à ses deux extrémités et reposant en son milieu sur un appui 5. Les deux lignes à retard sont représentées par les deux transducteurs 9 et 10 qui rayonnent les ondes de surface perpendiculairement au plan de la figure. On peut voir en (a) une ligne en pointillé représentant la déformée 48 de la lamelle, lorsque celle-ci subit une sollicitation qui se compose de l'action de la pression $p_3$ dans toute l'étendue de la face supérieure. La pression $p_3$ est par exemple la pression atmosphérique et on suppose en (a) qu'aucune autre pression n'agit sur la lamelle. En (b), on peut voir une courbe 45 qui représente la déformation supplémentaire à ajouter algébriquement à la déformée 48, lorsqu'une pression $p_1$ agit sur la portion AO de la face inférieure de la lamelle 3. En (c), on peut voir une courbe 46 qui représente la déformation supplémentaire à ajouter algébriquement à la déformée 48, lorsqu'une pression $p_2$ agit sur la portion OB de la face inférieure de la lamelle 3. Toutes les déformations se produisent dans le domaine linéaire de la loi de Hooke, de sorte que le principe de superposition leur est applicable. L'examen de la figure 2 fait ressortir qu'un chargement asymétrique de la lamelle 3 provenant de l'action de pressions $p_1$ ou $p_2$ entraîne une asymétrie de la déformée 48 associée à un pivotement de la section droite au niveau de l'appui 5. Les fréquences d'oscillation déterminées par les moyens d'échange d'ondes élastiques de surface 9 et 10 subissent des variations inégales qui se traduisent par un écart en fréquence proportionnel à la différence des pressions $p_1$ et $p_2$. Si les moyens d'échange sont agencés symétriquement par rapport à l'appui 5, l'écart des fréquences d'oscillation ne dépend pas de la pression $p_3$.

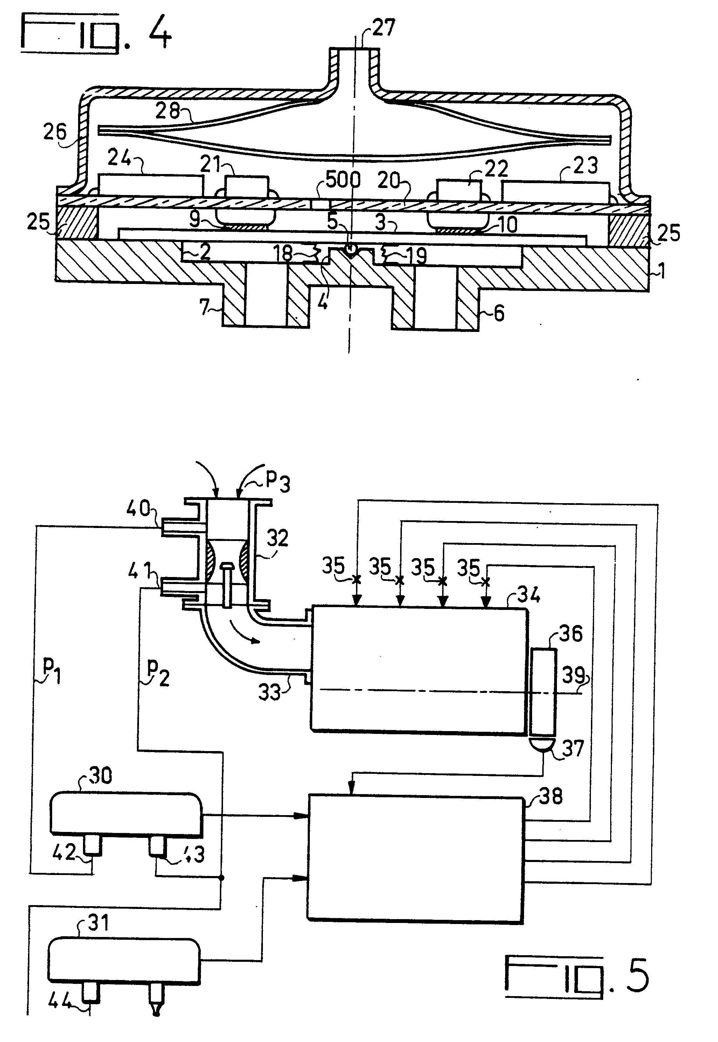

Les propriétés qui viennent d'être annoncées peuvent être analysées plus en détail en se référant à la figure 3. La lamelle 3 est prise entre deux encastrements 15 et 17 solidaires du support 47. L'appui 16 est situé à des distances 1 et 1' des encastrements. La lamelle 3 est munie de systèmes oscillateurs $L_1A_1$, $L_2A_2$ et $L_3A_3$ qui détectent les contraintes se manifestant dans la face supérieure de la lamelle 3 à trois emplacements distincts comme illustré sur la figure 3. Des mélangeurs soustractifs $M_{13}$, $M_{12}$ et $M_{23}$ fournissent des signaux dont les fréquences peuvent se calculer de la manière suivante. Si $p_1$, $p_2$ et $p_3$ sont les pressions qui agissent sur la lamelle 3 et si $\Delta f_1$, $\Delta f_2$ et $\Delta f_3$ sont respectivement les variations de fréquence produites par les systèmes oscillateurs $L_1A_1$, $L_2A_2$, $L_3A_3$, il vient :

$$\Delta f_1 = k_1 \left[ (p_3 - p_1) - a_1 (p_3 - p_2) \right] \qquad (1)$$

$$\Delta f_2 = k_2 \left[ - (p_3 - p_1) - a_2 (p_3 - p_2) \right] \qquad (2)$$

$$\Delta f_3 = k_3 \left[ (p_3 - p_2) - a_3 (p_3 - p_1) \right] \qquad (3)$$

où $k_1$, $k_2$, $k_3$, $a_1$, $a_2$ et $a_3$ sont des facteurs constants.

Pour que la lamelle 3 repose effectivement sur l'appui 16, on a supposé que la pression $p_3$ est égale ou supérieure aux pressions $p_1$ et $p_2$.

Si $l = l'$ et si les boucles oscillatrices $L_1A_1$, $L_2A_2$, $L_3A_3$ ont les mêmes caractéristiques, $k_1$ et $k_3$ sont égaux ainsi que $a_1$ et $a_3$. De plus, le facteur $a_2$ est égal à l'unité. Dans ces conditions, on peut poser : $k_1 - k_3 = k$ et $a_1 = a_3 = a$ ; en se servant des relations qui précèdent, il vient :

$$\Delta f_1 - \Delta f_3 = k (1 + a) (p_2 - p_1) \qquad (4)$$

Si en outre les moyens $L_1$, $L_2$ et $L_3$ sont agencés de façon à réaliser la condition $k = k_2$, on a :

$$\Delta f_2 - \Delta f_1 = k \left[ 2 p_1 - p_3 (3 - a) + p_2 (1 - a) \right] \qquad (5)$$

$$\Delta f_2 - \Delta f_3 = \left[ 2 p_2 - p_3 (3 - a) + p_1 (1 - a) \right] \qquad (6)$$

La relation (4) montre que la fréquence de la tension alternative disponible à la sortie du mélangeur $M_{13}$ est indépendante de $p_3$ et proportionnelle à la pression différentielle $p_2 - p_1$.

Les relations (5) et (6) montrent que la fréquence de la tension alternative disponible à la sortie d'un des mélangeurs $M_{12}$ ou $M_{23}$ peut être proportionnelle à $(p_3 - p)$ lorsque $p$ représente une pression uniforme appliquée à toute la face inférieure de la lamelle 3, ce qui revient à poser $p = p_1 = p_2$.

Sur la figure 4, on peut voir la vue en coupe d'un capteur de pression réalisé en suivant les indications données ci-dessus. Ce capteur se compose d'une embase support 1 muni de deux conduits 7 et 6 qui communiquent avec une cavité centrale 2. Un épaulement médian 4 partage la cavité 2 en deux chambres. La lamelle piézoélectrique 3 est collée ou encastrée sur le pourtour du support 1. La face dorsale repose sur un appui cylindrique 5 porté par une rainure en Vé de l'épaulement 4. L'étanchéité entre les chambres est assurée par l'appui 5 qui peut être réalisé en matériau élastomère ; elle peut également être assurée par des joints souples 18 et 19 collés au fond de la cavité 2 et à la face dorsale de la lamelle 3, ce qui permet de choisir pour l'appui 5 un matériau qui ne s'affaisse pas sous la charge. Une entretoise annulaire 25 est collée à la périphérie du support 1 afin de supporter un circuit imprimé 20 sur lequel on a agencé des amplificateurs 21 et 22 ainsi qu'un mélangeur 23 et un circuit d'alimentation régulée 24. La face frontale de la lamelle 3 porte des moyens d'échange d'ondes élastiques de surface 9 et 10 qui peuvent être constitués par des lignes à retard à peignes interdigités ou par des résonateurs à réseaux réflecteurs. Les moyens 9 et 10 sont reliés aux amplificateurs 21 et 22 de manière à former deux oscillateurs qui alimentent les entrées du mélangeur 23. Un orifice 500 percé dans le circuit 20 sert à transmettre la pression qui existe sous le capot 26 vers la face frontale de la lamelle 3. Un conduit 27 permet à la pression ambiante de s'établir à l'intérieur du capot 26. Afin d'empêcher l'humidité et les poussières d'atteindre la face frontale de la lamelle 3, une poche 28 déformable et étanche est prévue à l'intérieur du capot 26. Cette poche isole les constituants internes du capteur de toute pollution extérieure, mais elle n'empêche pas les pressions externe et interne de s'égaliser. Le capteur de la figure 4 est plus particulièrement destiné à mesurer la différence entre deux pressions $p_1$ et $p_2$ se manifestant à l'entrée des conduits 7 et 6.

La figure 5 illustre l'application que l'on peut faire du capteur de la figure 4 dans un système d'allumage pour moteur à combustion interne.

Le moteur 34 est alimenté par un carburateur 32 relié à une tubulure d'admission 33. Un dispositif déprimogène constitué par une buse étrangle la veine gazeuse de façon à créer une dépression entre deux conduits 40 et 41. Cette dépression est fonction du débit d'air Q aspiré par le moteur. Pour évaluer le débit Q on se sert d'un capteur de pression 30 dont les conduits 42 et 43 sont reliés respectivement aux prises de pression 40 et 41 du carburateur 33. Le capteur 30 fournit au circuit d'allumage 38 un signal dont la fréquence traduit l'écart des pressions $p_1$ et $p_2$ qui croît avec le débit Q. Un autre capteur 31 est utilisé pour mesurer la pression $p_2$. A cet effet, on utilise le conduit 44 relié à la prise 41 ; l'autre conduit est scellé après avoir fait le vide dans la chambre avec laquelle il communique. Le capteur 31 fournit une indication relative à la pression d'aspiration qui est reçue par le circuit d'allumage 38. L'indication du passage par le point mort haut est fournie au circuit d'allumage 38 par un capteur de position 37 placé au voisinage du volant moteur 36. Cette indication permet de déterminer la vitesse de rotation de l'arbre moteur 39. Le circuit 38 est donc en mesure d'évaluer à chaque régime l'angle d'avance à l'allumage et de fournir au bon moment l'impulsion haute tension aux bougies 35.

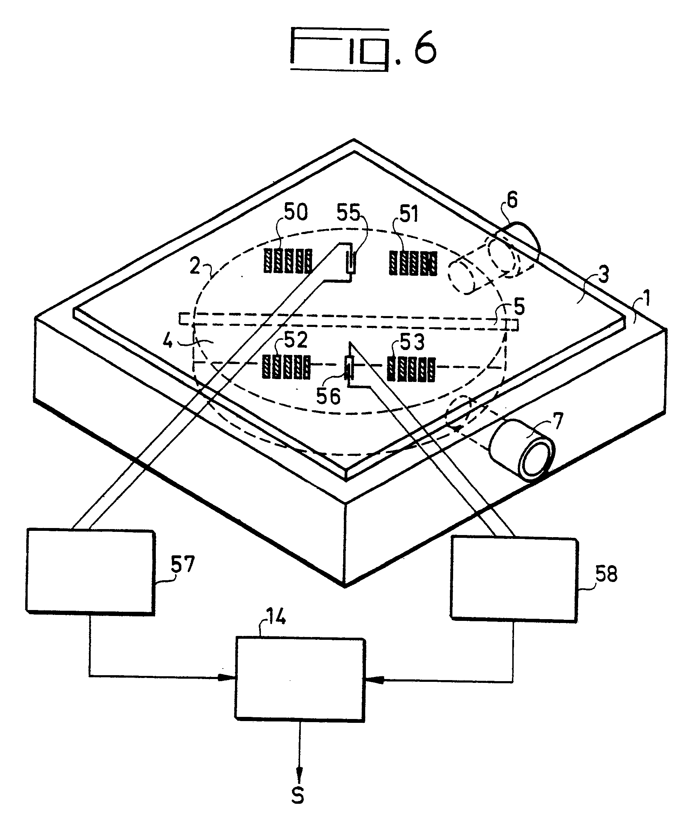

Sur la figure 6, on peut voir une variante de réalisation du capteur de pression selon l'invention. Les moyens d'échange d'ondes élastiques de surface sont constitués par des résonateurs. Le premier résonateur comporte deux réseaux réflecteurs 50 et 51 délimitant une cavité de résonance d'axe parallèle à l'appui intermédiaire 5. Un transducteur en peigne 55 couple cette cavité à un amplificateur à résistance négative 57 de manière à former un premier oscillateur accordable. Le second résonateur comprend les réseaux réflecteurs 52 et 53. Le transducteur en peigne 56 couple cette cavité à l'amplificateur 58 de façon à former le second oscillateur accordable. Les conduits 6 et 7 sont disposés latéralement dans ce mode de réalisation. Le fonctionnement du capteur de la figure 6 peut se comparer à celui du capteur de la figure 1. Lorsque la lamelle 3 est taillée dans du quartz ou du niobate de lithium cristallin, les réseaux réflecteurs peuvent être obtenus par bombardement ionique. On peut également utiliser dans chaque cavité deux transducteurs reliés par un amplificateur.

Bien que la description qui précède a illustré une lamelle 3 encastrée sur son pourtour, l'invention n'est pas limitée à ce mode de fixation. On peut également imaginer que la lamelle 3 repose sur son support par l'intermédiaire d'un bourrelet périphérique formant joint d'étanchéité. Dans ce cas, les axes d'échange des ondes élastiques de surface seront avantageusement situés au cinquième de la portée de la lamelle. Lorsqu'il s'agit d'une lamelle à bords encastrés, c'est au voisinage des encastrements que l'on observe les moments fléchissants les plus importants. Dans le cas de la figure 4, l'appui intermédiaire peut être prévu également sur la face supérieure de la lamelle 3. Dans ce cas, cet appui supérieur reposerait sur le circuit imprimé 20 et permettrait de mesurer des pressions $p_1$ et $p_2$ pouvant être supérieures à la pression $p_3$.

Un agencement symétrique du capteur de pression permet d'atteindre une très faible dérive thermique et une grande insensibilité aux variations de la pression $p_3$. Dans une version simplifiée, il est possible de supprimer la poche 28 et le conduit 27, car le gaz enfermé sous le capot peut voir sa pression croître avec la température sans que cet effet se traduise par une dérive de fréquence à la sortie du mélangeur 14.

Dans le cas où l'appui intermédiaire porte au milieu de la plage déformable de la plaquette 3, on peut réaliser un capteur différentiel en modifiant légèrement la structure illustrée par la figure 4. On peut supprimer le conduit 6 et créer un canal de communication dans le support 1 entre la chambre ou débouchait le conduit 6 et l'espace compris entre le capot 26 et l'ensemble 1-3. L'égalisation de pression qui en résulte permet de poser l'égalité $p = p_3 = p_2$. En introduisant cette relation dans la formule (2) et sachant que $a_2 = 1$, il vient :

$$\Delta f_2 = k_2 (p_1 - p) \qquad (7)$$

Cette relation (7) montre que le capteur ainsi modifié fonctionne en mesureur de pression différentielle entre les conduits 7 et 27. Si de surcroît, on fait $p_1 = 0$, en faisant le vide dans la chambre qui communique avec l'embout 7, on obtient un capteur de pression absolue p par le conduit 27.

## Revendications

1. Capteur de pression à ondes élastiques de surface comportant une lamelle déformable piézoélectrique (3) dont le pourtour possède un lien mécanique avec un support (1), des premiers et seconds moyens oscillateurs (12, 13) dont les fréquences d'oscillation sont déterminées par des premiers et seconds moyens d'échange d'ondes élastiques de surface situés sur l'une des faces de cette lamelle et des moyens mélangeurs (14) délivrant un signal dont la fréquence est égale à la différence des fréquences d'oscillation des premiers et seconds moyens oscillateurs, caractérisé en ce que la lamelle déformable piézoélectrique porte contre un appui intermédiaire (5) autorisant son pivotement ; les premiers et seconds moyens d'échange étant agencés de manière à donner naissance à des décalages en fréquence égaux et de mêmes signes en présence d'une sollicitation mécanique uniforme de la lamelle.

2. Capteur selon la revendication 1, caractérisé en ce que le support comporte une cavité (2) partagée en deux chambres adjacentes par une paroi séparatrice (4) servant de support à l'appui intermédiaire (5) ; des moyens d'étanchéité étant associés à cette paroi, afin de s'opposer à tout transfert de fluide entre les deux chambres.

3. Capteur selon la revendication 2, caractérisé en ce que l'ouverture donnant accès à la cavité (2) a une forme symétrique par rapport à la ligne de contact commune à l'appui intermédiaire (5) et la lamelle (3) qui recouvre cette ouverture.

4. Capteur selon la revendication 3, caractérisé en ce que les premiers et seconds moyens d'échange d'ondes élastiques de surface (8, 9, 10) sont disposés symétriquement par rapport à cette ligne de contact.

5. Capteur selon l'une quelconque des revendications 1 à 4, caractérisé en ce qu'il comporte des troisièmes moyens d'échange ($L_2$) et des troisièmes moyens oscillateurs ($A_2$) ; des moyens mélangeurs ($M_{12}$) délivrant un signal dont la fréquence est égale à la différence des fréquences d'oscillation des troisièmes moyens oscillateurs et de l'un des premiers et seconds moyens oscillateurs ; les troisièmes moyens d'échange ($L_2$) surplombant l'appui intermédiaire.

6. Capteur selon l'une quelconque des revendications 1 à 5, caractérisé en ce que les moyens d'échange d'ondes élastiques de surface sont des lignes à retard.

7. Capteur selon l'une quelconque des revendications 1 à 5, caractérisé en ce que les moyens d'échange d'ondes élastiques de surface sont des résonateurs (50, 51, 52, 53) comprenant chacun deux réseaux réflecteurs.

8. Capteur selon l'une quelconque des revendications 6 et 7, caractérisé en ce que les moyens d'échange d'ondes élastiques de surface fonctionnent avec des peignes conducteurs interdigités portés par un matériau piézoélectrique.

9. Capteur selon la revendication 8, caractérisé en ce que la lamelle déformable piézoélectrique (3) est taillée dans ce matériau piézoélectrique.

10. Capteur selon l'une quelconque des revendications 1 à 9, caractérisé en ce que la lamelle déformable piézoélectrique (3) est encastrée sur son pourtour en la collant sur son support (1).

11. Capteur selon l'une quelconque des revendications 2 à 10, caractérisé en ce que pour mesurer une pression différentielle, les chambres sont reliées à deux conduits d'amenée de fluide sous pression (6, 7).

12. Capteur selon l'une quelconque des revendications 2 à 10, caractérisé en ce que pour mesurer une pression absolue, l'une des chambres est reliée à un conduit (44) et l'autre chambre est une chambre à vide.

13. Capteur selon la revendication 1, caractérisé en ce que l'appui intermédiaire (5) et le support (1) sont situés d'un même côté de ladite lamelle déformable piézoélectrique (3).

14. Capteur selon la revendication 1, caractérisé en ce que ladite lamelle déformable piézoélectrique (3) est située entre l'appui intermédiaire (5) et le support (1).

15. Système d'allumage pour moteur à combustion interne, caractérisé en ce qu'il met en œuvre au moins un capteur selon l'une quelconque des revendications précédentes.

16. Débitmètre à capteur de pression différentielle, caractérisé en ce qu'il met en œuvre un capteur selon l'une quelconque des revendications 1 à 11 et 13, 14.

## Claims

1. Elastic surface wave pressure probe comprising a piezoelectric deformable sheet (3), the periphery of which is in mechanic connection with a carrier (1), first and second oscillator means (12, 13) the oscillation frequencies of which are determined by first and second elastic surface wave exchange means lying on one of the faces of this sheet, and mixer means (14) providing a signal the frequency of which is equal to the oscillation frequency difference of the first and second oscillator means, characterized in that the deformable piezoelectric sheet bears against an intermediate support (5) allowing pivotal movement therof ; the first and second exchange means being arranged in a manner to cause equal frequency shifts of the same sign in case of uniform mechanic loading of the sheet.

2. Probe in accordance with claim 1, characterized in that the carrier comprises a cavity (2) partitioned into two adjacent chambers by a separating wall (4) carrying the intermediate support (5) ; sealing means being associated with this wall in order to oppose against any fluid transfer between the two chambers.

3. Probe in accordance with claim 2, characterized in that the opening allowing access to the cavity (2) has a symmetric shape with respect to the common contacting line of the intermediate support (5) and the sheet (3) which covers said opening.

4. Probe in accordance with claim 3, characterized in that the first and second elastic surface wave exchange means (8, 9, 10) are symmetrically arranged with respect to said contacting line.

5. Probe in accordance with any of claims 1 to 4, characterized in that it comprises third exchange means ($L_2$) and third oscillator means ($A_2$) ; mixer means ($M_{12}$) providing a signal the frequency of which is equal to the oscillation frequency difference of the third oscillator means and one of the first and second oscillator means ; the third exchange means ($L_2$) being provided perpendicularly above the intermediate support.

6. Probe in accordance with any of claims 1 to 5, characterized in that the elastic surface wave exchange means are delay lines.

7. Probe in accordance with any of claims 1 to 5, characterized in that the elastic surface wave exchange means are resonators (50, 51, 52, 53) each comprising two reflecting grids.

8. Probe in accordance with any of claims 6 and 7, characterized in that the elastic surface wave exchange means operate with interdigitated conductor combs carried by a piezoelectric material.

9. Probe in accordance with claim 8, characterized in that the deformable piezoelectric sheet (3) is cut from said piezoelectric material.

10. Probe in accordance with any of claims 2 to 9, characterized in that the deformable piezoelectric sheet (3) is fitted into its carrier (1) on its periphery and glued thereto.

11. Probe in accordance with any of claims 2 to 10, characterized in that, for measurement of a differential pressure, the chambers are connected to two pressurized fluid supply conduits (6, 7).

12. Probe in accordance with any of claims 2 to 10, characterized in that, for measurement of an absolute pressure, one of the chambers is connected to a conduit (44) and the other chamber is connected to a vacuum chamber.

13. Probe in accordance with claim 1, characterized in that the intermediate support (5) and the carrier (1) lie on the same side of the deformable piezoelectric sheet (3).

14. Probe in accordance with claim 1, characterized in that the deformable piezoelectric sheet (3) is located between the intermediate support (5) and the carrier (1).

15. Ignition system for an internal combustion engine, characterized in that it uses at least one probe in accordance with any of the preceding claims.

16. Differential pressure probe flow meter, characterized in that it uses a probe in accordance with any of claims 1 to 11 and 13, 14.

## Ansprüche

1. Mit elastischen Oberflächenwellen arbeitender Druckaufnehmer mit einer deformierbaren piezoelektrischen Lamelle (3), deren Umfang eine mechanische Verbindung mit einem Träger (1) aufweist, mit einer ersten und einer zweiten Oszillatoreinrichtung (12, 13), deren Schwingungsfrequenzen bestimmt sind durch eine erste bzw. eine zweite Einrichtung zum Austauschen elastischer Oberflächenwellen auf der einen der Flächen dieser Lamelle, und mit einem Mischer (14), der ein Signal abgibt, dessen Frequenz gleich der Differenz der Schwingungsfrequenzen der ersten und der zweiten Oszillatoreinrichtung ist, dadurch gekennzeichnet, daß die deformierbare piezoelektrische Lamelle gegen eine Zwischenabstützung (5) anliegt, die ihre Schwenkbewegung zuläßt, wobei die erste und die zweite Austauscheinrichtung so angeordnet sind, daß sie Frequenzverschiebungen verursachen, die gleich sind und gleiche Vorzeichen aufweisen, wenn eine gleichförmige mechanische Beaufschlagung der Lamelle vorhanden ist.

2. Aufnehmer nach Anspruch 1, dadurch gekennzeichnet, daß der Träger einen Hohlraum (2) umfaßt, der durch eine Trennwand (4), die als Träger der Zwischenabstützung (5) dient, in zwei nebeneinander liegende Kammern unterteilt ist ; wobei dieser Wandung Dichtungsmittel zugeordnet sind, um jegliche Fluidvermittlung zwischen den beiden Kammern zu sperren.

3. Aufnehmer nach Anspruch 2, dadurch gekennzeichnet, daß die Zugang zum Hohlraum (2) gewährende Öffnung eine symmetrische Form in Bezug auf die gemeinsame Kontaktlinie der Zwischenabstützung (5) und der diese Öffnung bedeckenden Lamelle (3) aufweist.

4. Aufnehmer nach Anspruch 3, dadurch gekennzeichnet, daß die erste und die zweite Austauscheinrichtung zum Austauschen von elastischen Oberflächenwellen (8, 9, 10) symmetrisch in Bezug auf diese Kontaktlinie angeordnet sind.

5. Aufnehmer nach einem der Ansprüche 1 bis 4, dadurch gekennzeichnet, daß er eine dritte Austauscheinrichtung ($L_2$) und eine dritte Oszillatoreinrichtung ($A_2$) umfaßt ; wobei ein Mischer ($M_{12}$) ein Signal abgibt, dessen Frequenz gleich der Schwingungsfrequenzdifferenz der dritten Oszillatoreinrichtung und der ersten oder der zweiten Oszillatoreinrichtung ist ; wobei die dritte Austauscheinrichtung ($L_2$) senkrecht über der Zwischenabstützung angeordnet ist.

6. Aufnehmer nach einem der Ansprüche 1 bis 5, dadurch gekennzeichnet, daß die Austauscheinrichtungen zum Austauschen von elastischen Oberflächenwellen Verzögerungsleitungen sind.

7. Aufnehmer nach einem der Ansprüche 1 bis 5, dadurch gekennzeichnet, daß die Austauscheinrichtungen zum Austauschen von elastischen Oberflächenwellen Resonatoren (50, 51, 52, 53) sind, die jeweils zwei reflektierende Gitter umfassen.

8. Aufnehmer nach Anspruch 6 oder 7, dadurch gekennzeichnet, daß die Austauscheinrichtungen zum Austauschen von elastischen Oberflächenwellen mit leitfähigen verschachtelten Kämmen arbeiten, die auf einem piezoelektrischen Material angebracht sind.

9. Aufnehmer nach Anspruch 8, dadurch gekennzeichnet, daß die deformierbare piezoelektrische Lamelle (3) aus diesem piezoelektrischen Material ausgeschnitten ist.

10. Aufnehmer nach einem der Ansprüche 2 bis 9, dadurch gekennzeichnet, daß die deformierbare piezoelektrische Lamelle (3) an ihrem Umfang in ihren Träger (1) eingesetzt und mit diesem verklebt ist.

11. Aufnehmer nach einem der Ansprüche 2 bis 10, dadurch gekennzeichnet, daß zur Messung einer Druckdifferenz die Kammern mit zwei Druckfluid-Zufuhrleitungen (6, 7) verbunden sind.

12. Aufnehmer nach einem der Ansprüche 2 bis 10, dadurch gekennzeichnet, daß zur Messung eines absoluten Druckes eine der Kammern mit einer Leitung (44) und die andere Kammer mit einer Vakuumkammer verbunden ist.

13. Aufnehmer nach Anspruch 1, dadurch gekennzeichnet, daß die Zwischenabstützung (5) und der Träger (1) auf derselben Seite der deformierbaren piezoelektrischen Lamelle (3) angeordnet sind.

14. Aufnehmer nach Anspruch 1, dadurch gekennzeichnet, daß die deformierbare piezoelektrische Lamelle (3) zwischen der Zwischenabstützung (5) und dem Träger (1) angeordnet ist.

15. Zündanlage für einen Verbrennungsmotor mit interner Verbrennung, dadurch gekennzeichnet, daß in ihr wenigstens ein Aufnehmer nach einem der vorstehenden Ansprüche verwendet ist.

16. Mit einem Druckdifferenzaufnehmer arbeitender Durchflußmesser, dadurch gekennzeichnet, daß in ihm ein Aufnehmer nach einem der Ansprüche 1 bis 11 und 13, 14 verwendet ist.

FIG. 1

Fig. 2

Fig. 3

FIG. 4

FIG. 5

Fig. 6